# EUROPÄISCHE PATENTSCHRIFT

(11) **EP 3 718 795 B1**
(45) Veröffentlichungstag und Bekanntmachung des Hinweises auf die Patenterteilung: **23.03.2022**
(21) Anmeldenummer: 19167230.2
(22) Anmeldetag: 04.04.2019
(51) Int. Cl.: B60D 1/62, B60D 5/00, B60R 16/02, B62D 47/02

(54) **KABELFÜHRUNG FÜR EIN MEHRGLIEDRIGES FAHRZEUG**
CABLE GUIDE FOR AN ARTICULATED VEHICLE
GUIDAGE DE CÂBLE POUR UN VÉHICULE À PLUSIEURS ÉLÉMENTS

(43) Veröffentlichungstag der Anmeldung: 07.10.2020
(73) Patentinhaber: ATG Autotechnik GmbH, 22962 Siek (DE)
(72) Erfinder: Browne, Denis, 22946 Trittau (DE)
(74) Vertreter: Glawe, Delfs, Moll

(56) Entgegenhaltungen:
- EP-A1- 2 233 327
- EP-A1- 3 354 495
- WO-A1-2018/190761
- CN-U- 201 769 805
- US-B1- 9 746 106

## Beschreibung

Die Erfindung betrifft eine Kabelführung für ein mehrgliedriges Fahrzeug.

Eine solche Kabelführung kann beispielsweise bei Gelenkbussen verwendet werden oder bei anderen Arten von straßengebundenen oder schienengebundenen mehrgliedrigen Fahrzeugen (EP 2 233 327 A1, EP 2 384 913 A1, EP 3 354 495 A1). Bei diesen Fahrzeugen ist während der Fahrt ein Übergang der Passagiere zwischen den Wagen möglich. Um die Passagiere vor Umgebungseinflüssen zu schützen, wird der Übergang zwischen den Wagen normalerweise mit einem Faltenbalg versehen, der das Fahrzeuggelenk umgibt.

Es gibt technische Funktionen, die mehrere Wagen eines mehrgliedrigen Fahrzeugs betreffen. Beispielsweise kann ein vorne sitzender Fahrer einen Lichtschalter betätigen, um ein Rücklicht am hinteren Ende des Fahrzeugs in Betrieb zu setzen. Dafür ist ein elektrisches Kabel erforderlich, das sich über den Zwischenraum zwischen den Wagen hinweg erstreckt. Weitere Funktionen erfordern Kabel in Form von Hydraulikleitungen, Luftschläuchen und sonstigen Versorgungsleitungen zwischen den Wagen. Bei elektrisch angetriebenen Fahrzeugen kann es erforderlich sein, die zum Betrieb des Elektroantriebs erforderliche elektrische Energie mit einem Kabel von einem Wagen zum nächsten Wagen zu übertragen.

In Niederflurfahrzeugen, bei denen der für die Passagiere bestimmte Boden möglichst tief angeordnet ist, bleibt unterhalb des Durchgangs nur wenig Platz. Mehr Platz steht oberhalb des Durchgangs zur Verfügung, weswegen die Kabel häufig dort geführt sind.

Für diese Kabel ist eine Kabelführung erforderlich, die einerseits den Kabeln eine ausreichende Führung bietet, aber andererseits den Kabeln ausreichende Freiheit lässt, um die beim Durchfahren von Kurven oder Bodenwellen auftretenden Bewegungen aufnehmen zu können.

Der Erfindung liegt die Aufgabe zugrunde, eine Kabelführung für ein mehrgliedriges Fahrzeug vorzustellen, mit der mechanische Spannungen gering gehalten werden. Ausgehend vom genannten Stand der Technik wird die Aufgabe gelöst mit den Merkmalen des Anspruchs 1. Vorteilhafte Ausführungsformen sind in den Unteransprüchen angegeben.

Die erfindungsgemäße Kabelführung umfasst eine Blattfeder und einen Kabelschlauch, der sich entlang der Blattfeder erstreckt. In dem Kabelschlauch ist ein Kabel geführt. Ein Halter hält den Kabelschlauch in einem festen Abstand relativ zu der Blattfeder. Der Kabelschlauch ist durch den Halter in Längsrichtung verschiebbar relativ zu der Blattfeder gelagert.

Indem der Kabelschlauch in einem festen Abstand zu der Blattfeder gehalten wird, ergibt sich eine definierte radiale Position des betreffenden Kabelabschnitts, wodurch beispielsweise sichergestellt werden kann, dass das Kabel einen bestimmten Mindestabstand zu anderen Elementen nicht unterschreitet. Ein solcher Mindestabstand ist häufig bei elektrischen Kabeln erforderlich, um unerwünschte elektromagnetische Wechselwirkungen auszuschließen. Dies gilt insbesondere, wenn im Fahrzeugbau mit zunehmend höheren elektrischen Spannungen gearbeitet wird.

Kabel im Sinne der vorliegenden Erfindung dienen dazu, technische Funktionen der Wagen eines mehrgliedrigen Fahrzeugs miteinander zu verknüpfen. Der Begriff Kabel umfasst alle Versorgungsleitungen, über die Signale oder Kräfte zwischen den Wagen übertragen werden. Vom Begriff Kabel umfasst sind insbesondere elektrische Kabel, Glasfaserleitungen, Hydraulikleitungen, Wasserleitungen, Luftschläuche für Klimaanlage und Heizung. In einer Ausführungsform wird über das Kabel elektrische Energie für den Elektroantrieb des Fahrzeugs übertragen.

In dem Kabelschlauch können ein oder mehrere solcher Kabel geführt sein. Um eine ausreichende Flexibilität zu bieten, kann der Kabelschlauch als Wellenschlauch ausgebildet sein.

Als Blattfeder wird ein lang gestrecktes Element bezeichnet, das sich quer zu seiner Längserstreckung in einer Richtung leicht elastisch verformen lässt und in einer anderen Richtung schwerer elastisch verformen lässt.

Der Halter kann in einer starren Verbindung mit der Blattfeder stehen. Der Kabelschlauch kann in dem Halter in Längsrichtung verschiebbar gelagert sein. Als Längsrichtung wird die Richtung bezeichnet, in der sich der Kabelschlauch im Bereich des Halters erstreckt. Eine zu der Längsrichtung rechtwinklige Richtung wird als Radialrichtung bezeichnet. Wenn der Kabelschlauch im Bereich des Halters in Radialrichtung eine definierte Position hat, ergibt sich daraus ein fester Abstand zwischen dem Kabelschlauch und der Blattfeder. Auch in den übrigen radialen Richtungen kann der Kabelschlauch sich nicht relativ zu dem Halter bewegen.

Denkbar ist auch eine umgekehrte Gestaltung, bei der der Kabelschlauch auch in Längsrichtung starr relativ zu dem Halter gehalten ist. Die Verschiebbarkeit in Längsrichtung kann dadurch ermöglicht werden, dass der Halter relativ zu der Blattfeder verschiebbar ist oder dass innerhalb des Halters ein Verschiebemechanismus vorgesehen ist.

Die verschiebbare Lagerung zwischen dem Halter und dem Kabelschlauch kann so gestaltet sein, dass der Halter eine Führungsfläche aufweist, die an der Außenfläche des Kabelschlauchs anliegt. Die Führungsfläche kann sich teilweise oder vollständig über den Umfang des Kabelschlauchs erstrecken. Die Führungsfläche und/oder der Kabelschlauch können eine Oberfläche mit einem niedrigen Reibungskoeffizienten haben, so dass das Verschieben in Längsrichtung unter reduziertem Kraftaufwand möglich ist. Der Halter kann eine Führungshülse aus Kunststoff umfassen, deren Innenfläche die Führungsfläche bildet.

Die Kabelführung kann eine Mehrzahl von Haltern zwischen der Blattfeder und dem Kabelschlauch umfassen. Die Anzahl der Kabelhalter kann beispielsweise zwischen 2 und 10, vorzugsweise zwischen 4 und 8 liegen. Die Kabelführung kann so gestaltet sein, dass alle Halter eine Verschiebung in Längsrichtung zwischen dem Kabelschlauch und der Blattfeder zulassen. Möglich ist auch, dass ein Teil der Halter eine solche Längsverschiebung zulässt, während ein anderer Teil der Halter den Kabelschlauch in Längsrichtung starr relativ zu der Blattfeder hält.

Eine in Längsrichtung starre Verbindung zwischen dem Halter und dem Kabelschlauch kann beispielsweise durch einen Reibschluss hergestellt werden, indem der Kabelschlauch in dem Halter geklemmt ist. Möglich ist auch ein in Längsrichtung wirksamer Formschluss. Dieser kann beispielsweise hergestellt werden, indem der Kabelschlauch als Wellenschlauch ausgebildet ist und ein Vorsprung des Halters in eine Vertiefung des Wellenschlauches eingreift.

Ein starrer Halter kann ein zu einem Wagen des mehrgliedrigen Fahrzeugs benachbarter Halter sein, was bedeutet, dass es zwischen dem starren Halter und dem Wagen keinen weiteren Halter gibt, der den Kabelschlauch in einem festen Abstand zu der Blattfeder hält. Der starre Halter kann mit einer Tragestruktur eines angrenzenden Wagens verbunden sein, so dass der Kabelschlauch in einem festen Abstand relativ zu der Tragestruktur des Wagens gehalten wird.

Die Verbindung zwischen dem Halter und der Blattfeder kann als Gelenkverbindung ausgestaltet sein, wobei die Drehachse des Gelenks mit der Längsrichtung vorzugsweise einem rechten Winkel einschließt. Auf diese Weise kann eine Schwenkbewegung zwischen dem Halter und der Blattfeder ermöglicht werden. Insbesondere kann die Drehachse einen rechten Winkel mit einer Ebene bilden, in der sich die Blattfeder elastisch verformt.

Eine Gelenkverbindung zwischen dem Halter und der Blattfeder kann sich insbesondere anbieten, wenn der Halter als starrer Halter ausgebildet ist. Der starre Halter kann dazu ausgelegt sein, ein Ende der Blattfeder in einem festen Abstand zur der Tragestruktur eines angrenzenden Wagens zu halten. Die Gelenkverbindung kann am Ende der Blattfeder angeschlagen sein.

In einer Ausführungsform umfasst die Kabelführung zwei starre Halter, so dass der Kabelschlauch benachbart zu jedem der angrenzenden Wagen in einem starren Halter gehalten wird. Zwischen den starren Haltern ist vorzugsweise eine Mehrzahl von verschiebbaren Haltern angeordnet. Beispielsweise kann die Kabelführung insgesamt sechs Halter umfassen, wobei zwei starre Halter vier verschiebbare Halter zwischen sich einschließen.

Die erfindungsgemäße Kabelführung kann eine Mehrzahl von Kabelschläuchen umfassen, wobei jeder der Kabelschläuche in einem festen Abstand zu der Blattfeder gehalten wird. Ein mit der Blattfeder verbundener Halter kann dazu ausgelegt sein, eine Mehrzahl von Kabelschläuchen zu halten.

Die Kabelschläuche können auf zwei Seiten der Blattfeder angeordnet sein. Auf zwei Seiten bedeutet, dass eine in dem betreffenden Kabelabschnitt von der Blattfeder aufgespannte Ebene zwischen den Kabelschläuchen eingeschlossen ist. Zusätzlich oder alternativ dazu kann auf einer oder beiden Seiten der Blattfeder eine Mehrzahl von Kabelschläuchen angeordnet sein.

Die Kabelführung umfasst erfindungsgemäß einen Mittelbügel , der dazu bestimmt ist, sich in Querrichtung des mehrgliedrigen Fahrzeugs zu erstrecken. Der Mittelbügel umschließt einen für Passagiere bestimmten Durchgang .

Die Blattfeder und der Kabelschlauch können oberhalb des Durchgangs angeordnet sein. Es kann ein den Durchgang umgebender Faltenbalg vorgesehen sein, um die Passagiere vor Umgebungseinflüssen zu schützen. Der Mittelbügel kann sich entlang der Kontur des Faltenbalgs erstrecken.

Erfindungsgemäß ist zwischen der Blattfeder und dem Mittelbügel eine Verbindung . Die Verbindung kann so gestaltet sein, dass einerseits die erforderliche Bewegungsfreiheit zwischen der Blattfeder und dem Mittelbügel ermöglicht wird, während andererseits solche Bewegungen unterbunden werden, die unerwünscht sind. Unerwünscht sind unter anderem Bewegungen, durch die die Blattfeder oder ein Kabelschlauch am Mittelbügel anschlägt. Hingegen ist gewünscht, dass in Längsrichtung ein begrenztes Maß an Bewegungsfreiheit zwischen der Blattfeder und dem Mittelbügel besteht.

Die Verbindung zwischen dem Mittelbügel und der Blattfeder kann einen Führungshebel umfassen, der über ein erstes Gelenk an der Blattfeder und/oder über ein zweites Gelenk an dem Mittelbügel angeschlagen ist. Durch den Führungshebel kann ein Mindestabstand zwischen der Blattfeder und dem Mittelbügel definiert werden, so dass ein Anstoßen vermieden wird.

Die Verbindung kann sich zwischen der Blattfeder und einer Strebe des Mittelbügels erstrecken. Die Verbindung kann so gestaltet sein, dass die Blattfeder unterhalb der Strebe angeordnet ist, wenn der Mittelbügel bestimmungsgemäß in einem mehrgliedrigen Fahrzeug verwendet wird. Der Kabelschlauch kann bezogen auf seine Höhenposition zwischen der Strebe und der Blattfeder angeordnet sein. Insbesondere kann der Kabelschlauch unterhalb der Strebe und oberhalb der Blattfeder positioniert sein. Dies kann für einen Teil der Kabelschläuche der erfindungsgemäßen Kabelführung gelten. In einer bevorzugten Ausführungsform sind alle Kabelschläuche bezogen auf ihre Höhenposition zwischen der Strebe und der Blattfeder angeordnet. Je größer der vertikale Abstand zwischen der Strebe und der Blattfeder ist, desto einfacher wird es, mit einem im Wesentlichen vertikal ausgerichteten Führungshebel die Verschiebungen in Längsrichtung auszugleichen.

Bei mehrgliedrigen Fahrzeugen kann der Mittelbügel so geführt sein, dass er immer eine mittige Stellung zwischen den beiden angrenzenden Wagen einnimmt. Mit einem solchen Mittelbügel kann die erfindungsgemäße Kabelführung ohne weiteres verwendet werden. Möglich ist auch eine Verwendung mit Mittelbügeln, die im Betrieb des Gelenkfahrzeugs nicht auf eine mittige Position zwischen dem Vorderwagen und dem Hinterwagen festgelegt sind. Beispielsweise kann der Mittelbügel mittels einer Lenkstange in einem festen Abstand oder einem festen Mindestabstand zu dem ersten Wagen oder dem zweiten Wagen gehalten sein. Die Lenkstange kann an dem Mittelbügel angelenkt sein und eine Drehung des Mittelbügels um eine senkrechte Achse erlauben. Wenn der Mittelbügel durch eine solche Lenkstange in einem festen Abstand zu einem der Wagen gehalten wird, werden Nickbewegungen durch eine Relativbewegung zwischen dem Mittelbügel und dem anderen Wagen ausgeglichen.

Statt eines vollständig starren Lenkers kann auch eine Verbindung vorgesehen sein, die gegenüber Druckkräften starr ist, die sich aber unter Zugkräften verlängern lässt. Wenn das Gelenkfahrzeug über eine Kuppe fährt und sich der Abstand zwischen dem Vorderwagens und dem Hinterwagen im oberen Bereich deswegen vergrößert, kann der Mittelbügel sich von dem Wagen, zu dem die Verbindung besteht, entfernen und dadurch dazu beitragen, den Abstand zu überbrücken. Der Abstand zwischen dem Mittelbügel und dem Vorderwagen oder Hinterwagen, den die Lenkstange im Normalzustand definiert, ist dann zugleich der Mindestabstand. Hingegen kann der Abstand durch Zugkraft vergrößert werden.

Die Erfindung betrifft außerdem ein Mittelbügelsystem, bei dem die Blattfeder einer erfindungsgemäßen Kabelführung mit einer Strebe des Mittelbügels verbunden ist. Die Erfindung betrifft ferner ein mehrgliedriges Fahrzeug, bei dem zwischen einem ersten Wagen und einem zweiten Wagen eine solche Kabelführung angeordnet ist. Der erste Wagen und der zweite Wagen sind über ein Fahrzeuggelenk gelenkig miteinander verbunden. Das mehrgliedrige Fahrzeug kann insbesondere ein Gelenkbus sein, bei dem die Kabelführung zwischen einem Vorderwagen und einem Hinterwagen angeordnet ist. Der Gelenkbus kann auch mehr als zwei Wagen, insbesondere drei Wagen umfassen.

Die Erfindung wird nachfolgend unter Bezugnahme auf die beigefügten Zeichnungen anhand vorteilhafter Ausführungsformen beschrieben. Es zeigen:
- Fig. 1:: eine Seitenansicht eines Gelenkfahrzeugs;
- Fig. 2:: eine perspektivische Ansicht eines Mittelbügelsystems des Gelenkfahrzeugs aus Fig. 1;
- Fig. 3:: eine Ansicht von oben auf eine erfindungsgemäße Kabelführung;
- Fig. 4:: Komponenten einer erfindungsgemäßen Kabelführung;
- Fig. 5:: die Komponenten aus Fig. 4 in einer perspektivischen Darstellung;
- Fig. 6:: ein Detail aus Fig. 5 in vergrößerter Darstellung;
- Fig. 7:: ein anderes Detail aus Fig. 5 in vergrößerter Darstellung;
- Fig. 8:: einen Halter einer erfindungsgemäßen Kabelführung im Querschnitt;
- Fig. 9:: einen verschiebbaren Halter einer erfindungsgemäßen Kabelführung im Längsschnitt;
- Fig. 10:: einen starren Halter einer erfindungsgemäßen Kabelführung im Längsschnitt;
- Fig. 11:: einen Anschluss einer erfindungsgemäßen Kabelführung an eine Tragestruktur eines Wagens;
- Fig. 12:: einen Ausschnitt aus einer erfindungsgemäßen Kabelführung in einem ersten Zustand;
- Fig. 13:: die Ansicht gemäß Fig. 12 in einem zweiten Zustand der Kabelführung.

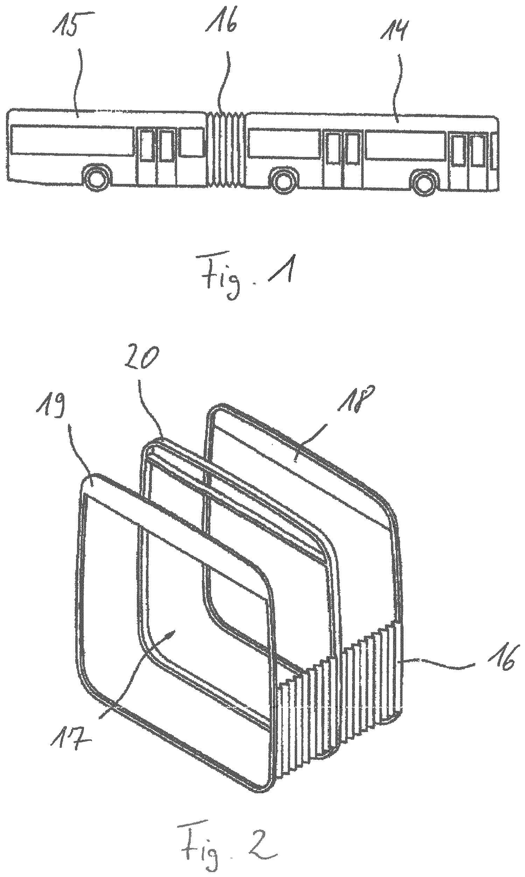

Ein in Fig. 1 gezeigter Gelenkbus umfasst einen Vorderwagen 14 und einen Hinterwagen 15. Der Vorderwagen 14 und der Hinterwagen 15 sind über ein in Fig. 1 nicht dargestelltes Fahrzeuggelenk derart miteinander verbunden, dass Passagiere während der Fahrt durch einen Durchgang 17 hindurch zwischen dem Vorderwagen 14 und dem Hinterwagen 15 wechseln können. Ein Faltenbalg 16 umgibt das Fahrzeuggelenk und den Durchgang 17. Ein Mittelbügel ist im Zwischenraum zwischen dem Vorderwagen 14 und dem Hinterwagen 15 angeordnet und in Fig. 1 durch den Faltenbalg 16 verdeckt.

Der Gelenkbus ist elektrisch angetrieben, wobei ein Elektromotor auf die hintere Achse des Vorderwagens wirkt. Batterien, aus denen der Elektromotor versorgt wird, sind im Hinterwagen 15 und im Vorderwagen 14 angeordnet. Kabel, mit denen elektrische Energie von der Batterie im Hinterwagen 15 zu dem Elektromotor im Vorderwagen 14 übertragen wird, erstrecken sich neben anderen Versorgungsleitungen durch den Zwischenraum zwischen dem Vorderwagen 14 und dem Hinterwagen 15.

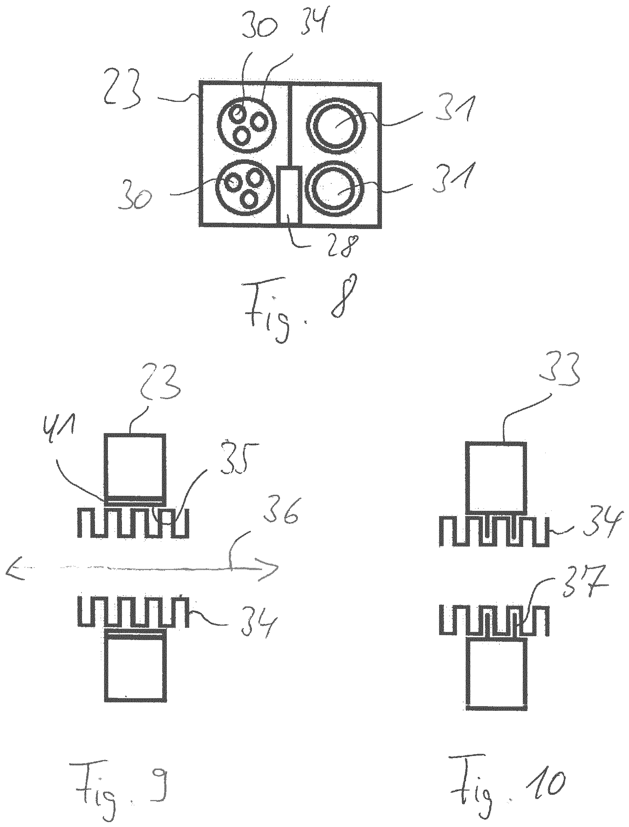

Ein Querschnitt durch den Kabelstrang zwischen dem Vorderwagen 14 und dem Hinterwagen 15 ist in Fig. 8 gezeigt. In einem Halter 23 sind vier Kabelschläuche 34 geführt. In zweien der Kabelschläuche 34 ist ein einzelnes Kabel 31 mit großem Durchmesser geführt. Über die Kabel 31 wird die elektrische Energie für den Elektroantrieb des Gelenkbusses übertragen. In den beiden anderen Kabelschläuche 34 ist jeweils eine Mehrzahl von Kabeln 30 geführt, wobei es sich jeweils um elektrische Kabel, Wasserschläuche, Luftschläuche, Hydraulikleitungen oder sonstige Versorgungsleitungen handeln kann.

Fig. 2 zeigt den Endrahmen 18 des Vorderwagens 14 und den Endrahmen 19 des Hinterwagens 15. Der Faltenbalg 16 ist in Fig. 2 nur ausschnittsweise gezeigt. Zwischen dem Endrahmen 18 und dem Endrahmen 19 ist ein Mittelbügel 20 angeordnet, der dem Faltenbalg 16 zusätzlichen Halt vermittelt.

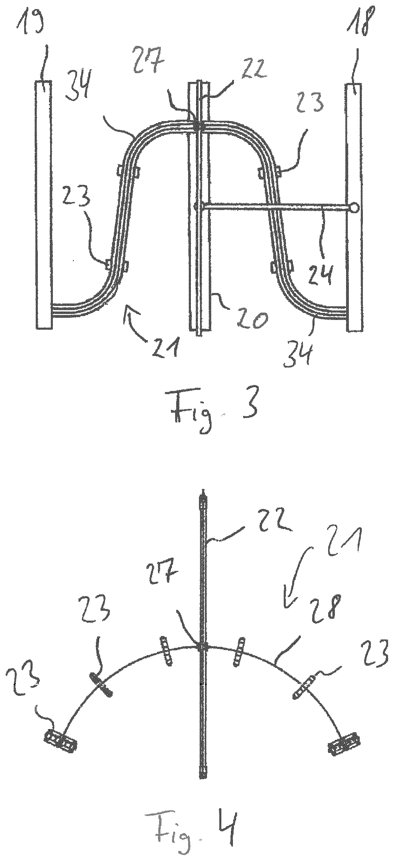

Gemäß Fig. 3 erstreckt sich eine Kabelführung 21 mit einer Mehrzahl von Kabelschläuchen 34 zwischen dem Endrahmen 18 und dem Endrahmen 19. Die Kabelführung 21 nimmt im Zwischenraum zwischen dem Vorderwagen 14 und dem Hinterwagen 15 einen geschwungenen Weg, der sich im Wesentlichen in einer horizontalen Ebene erstreckt. Die Kabelführung 21 ist dadurch in der Lage, Bewegungen auszugleichen, die der Vorderwagen 14 und der Hinterwagen 15 relativ zueinander vollführen.

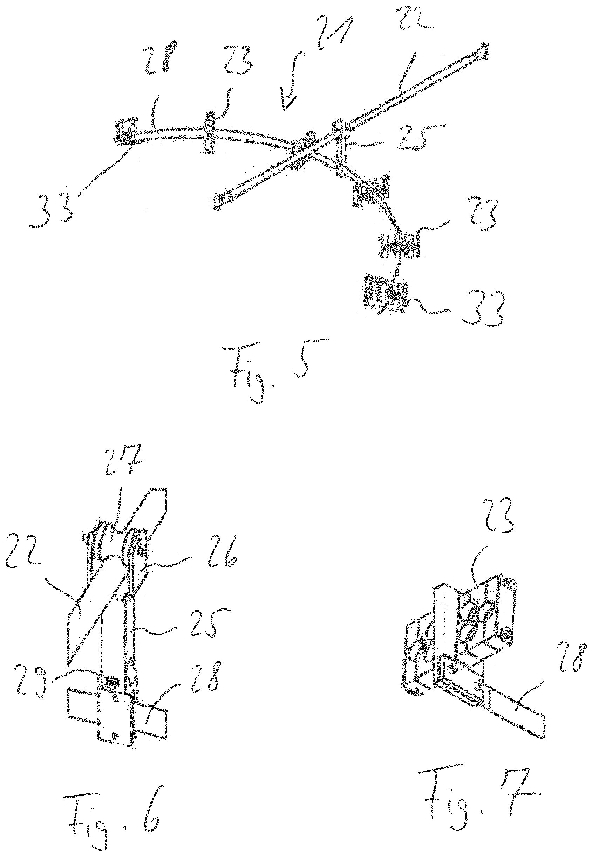

In den Figuren 4 und 5 ist die Kabelführung 21 ohne Kabelschläuche 34 dargestellt, so dass die Blattfeder 28 zu sehen ist, die sich entlang der Kabelschläuche 34 erstreckt. Die Blattfeder 28 ist auf unten näher erläuterte Weise mit einer Strebe 22 des Mittelbügels 20 verbunden. Zwischen der Blattfeder 28 und den Kabelschläuchen 34 sind Halter 23, 33 angeordnet, mit denen die Kabelschläuche 34 in einem festen Abstand zu der Blattfeder 28 gehalten werden. Die Halter 23, 33 sind gemäß Fig. 7 mit Öffnungen versehen, durch die die Kabelschläuche 34 hindurch geführt sind. In der beispielhaften Darstellung gemäß Fig. 7 werden auf beiden Seiten der Blattfeder 28 jeweils drei Kabelschläuche 34 geführt.

Der Mittelbügel 20 ist gemäß Fig. 3 über eine starre Lenkstange 24 mit dem Endrahmen 18 verbunden. Sowohl zwischen der Lenkstange 24 und dem Endrahmen 18 als auch zwischen der Lenkstange 24 und dem Mittelbügel 20 ist ein Gelenk ausgebildet, das Schwenkbewegungen um eine senkrechte Gelenkachse zulässt. Wenn der Gelenkbus also um eine Kurve fährt und in seitlicher Richtung einknickt, kann der Mittelbügel 20 die entsprechende Schwenkbewegung nachvollziehen, so dass er permanent ungefähr eine Mittelposition zwischen dem Endrahmen 18 und dem Endrahmen 19 einnimmt. Fährt der Gelenkbus hingegen über eine Kuppe, so wird die entsprechende Nickbewegung nur zwischen dem Mittelbügel 20 und dem Endrahmen 19 ausgeglichen. Der Abstand zwischen dem Endrahmen 18 und dem Mittelbügel 20 bleibt aufgrund der Lenkstange 24 konstant. Bei Nickbewegungen ist der Mittelbügel 20 also nicht in einer Mittelposition zwischen dem Endrahmen 18 und dem Endrahmen 19.

Der Mittelbügel 20 kann sich in Längsrichtung relativ zu dem Kabelstrang 21 bewegen, so dass der Kabelstrang 21 nicht gezwungen wird, jede Längsbewegung des Mittelbügels 20 nachzuvollziehen. Dazu umfasst die Kabelführung eine Strebe 22, die oberhalb eines oberen Rahmenteils des Mittelbügels 20 angeordnet ist. Die Querstange 22 erstreckt sich in Querrichtung parallel zu dem Mittelbügel 20. Zwischen der Querstange 22 und dem oberen Rahmenteil des Mittelbügels 20 bleibt ein Freiraum, durch den der Kabelstrang 21 hindurch geführt ist.

Der Kabelstrang 21 ist über einen Führungshebel 25 an der Querstange 22 aufgehängt. Der Führungshebel 25 umfasst gemäß Fig. 6 eine Aufnahme 26, in der eine Rolle 27 drehbar gelagert ist. Die Aufnahme 26 umfasst zwei Schenkel, die die Querstange 22 zwischen sich einschließen. Die ebenfalls zwischen den Schenkeln eingeschlossene Rolle 27 läuft auf der Oberseite der Querstange 22. Die Querstange 22 ist im Querschnitt kreisförmig, so dass der Führungshebel 25 um die Achse der Querstange 22 geschwenkt werden kann. Die Rolle 27 gleitet bei einer solchen Schwenkbewegung in Umfangsrichtung auf der Oberfläche der Querstange 22.

Das untere Ende des Führungshebels 25 ist an die Blattfeder 28 angeschlossen, die in der Mitte des Kabelstrangs 21 angeordnet ist und sich parallel zu dem Kabelstrang 21 erstreckt. An der Blattfeder 28 sind die Halter 23, 33 aufgehängt, in denen die Kabelschläuche 34 des Kabelstrangs 21 gehalten sind.

Zwischen dem Führungshebel 25 und der Blattfeder 28 ist ein Schwenkgelenk 29 ausgebildet, dessen Achse parallel zu der Querstange 22 ausgerichtet ist. Wird der Führungshebel 25 um die Querstange 22 geschwenkt, so knickt auch das Schwenkgelenk 29 ein. Bei einer Schwenkbewegung des Führungshebels 25 kann die Blattfeder 28 also ihre Ausrichtung beibehalten. Die Blattfeder 28 wird lediglich ein wenig nach oben angehoben, gemäß der Kreisbahn, die der Führungshebel 25 um die Querstange 22 beschreibt.

Die Kabelführung 21 umfasst zwei verschiedene Arten von Haltern, nämlich verschiebbare Halter 23 und starre Halter 33. Ein verschiebbarer Halter 23 ist in Fig. 9 in einem Längsschnitt dargestellt. Der als Wellenschlauch ausgebildete Kabelschlauch 34 erstreckt sich durch eine Öffnung des Halters 23, so dass der Halter 23 den Kabelschlauch 34 rundherum umgibt. Eine dem Kabelschlauch 34 zugewandte Führungsfläche 35 des Halters 23 wird durch eine Kunststoffhülse 41 gebildet.

Durch die Führungsfläche 35 des Halters 23 ergibt sich eine definierte radiale Position des Kabelschlauchs 34. Hingegen ist der Kabelschlauch 34 in Längsrichtung 36 relativ zu dem Halter 23 verschiebbar. Die Bewegung in Längsrichtung wird dadurch ermöglicht, dass die Führungsfläche 35 entlang der Oberfläche des Kabelschlauchs 34 gleitet.

Bei einem starren Halter 33, wie er in Fig. 10 dargestellt ist, ist eine Relativbewegung in Längsrichtung 36 zwischen dem Kabelschlauch 34 und dem Halter 33 ausgeschlossen. Von der Öffnung des Halters 33 ragen ringförmige Vorsprünge 37 nach innen, die in Vertiefungen des Wellenschlauches 34 eingreifen. Durch den Eingriff zwischen den ringförmigen Vorsprüngen 37 und dem Wellenschlauch 34 besteht ein in Längsrichtung 36 wirksamer Formschluss, so dass der Kabelschlauch 34 und der Halter 33 sich nicht relativ zueinander bewegen können.

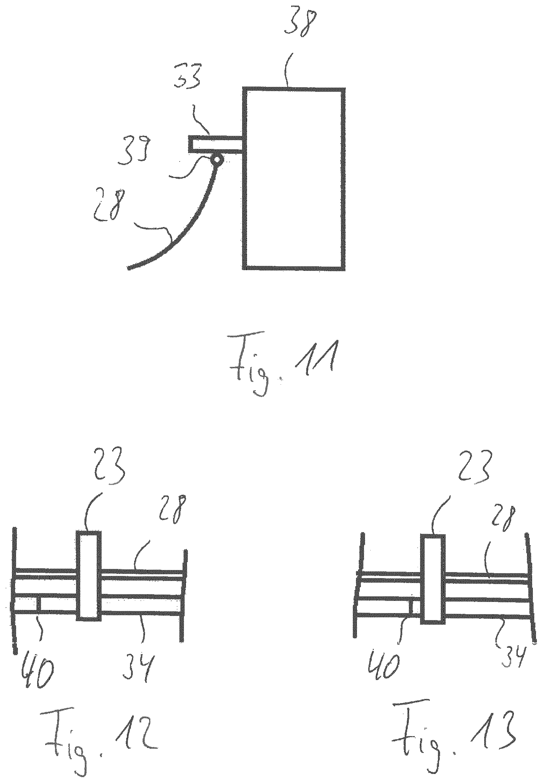

Bei der beispielhaften Ausführungsform gemäß Fig. 5 sind die starren Halter 33 am Übergang zu dem Vorderwagen 14 bzw. dem Hinterwagen 15 angeordnet. Wie Fig. 11 zeigt, steht der starre Halter 33 in fester Verbindung mit einer Tragestruktur 38 des Vorderwagens 14. Die Blattfeder 28 ist über ein Schwenkgelenk 39 mit dem starren Halter 33 verbunden. Die Drehachse des Schwenkgelenks 39 schließt mit der Längsrichtung und mit der Biegerichtung der Blattfeder 28 einen rechten Winkel ein. Wenn der Vorderwagen 14 und der Hinterwagen 15 sich relativ zueinander bewegen, kann dies aufgenommen werden durch eine elastische Verformung der Blattfeder 28 in Kombination mit einer Bewegung in dem Schwenkgelenk 39. Die Kabelschläuche 34 haben in dem starren Halter 33 eine feste Position relativ zu dem Vorderwagen 14, von der aus die Kabel weiter in den Vorderwagen 14 geleitet werden können.

Die verschiebbaren Halter 23 sind im zentralen Bereich des Zwischenraums zwischen dem Vorderwagen 14 und dem Hinterwagen 15 angeordnet. Die elastische Verformung der Blattfeder 28 würde in diesem Bereich zu Spannungen in den Kabelschläuchen 34 führen, wenn die Kabelschläuche 34 starr in dem Halter 23 gehalten wären. Die Halter 23 sind deswegen als verschiebbare Halter ausgebildet, so dass die Spannungen durch eine Längsverschiebung zwischen den Kabelschläuchen 34 und den verschiebbaren Haltern 23 aufgenommen werden können.

Die Fig. 12 zeigt in einer Ansicht von oben einen Ausschnitt einer erfindungsgemäßen Kabelführung 21, bei der der in einem verschiebbaren Halter 23 geführte Kabelschlauch eine Markierung 40 aufweist. Die Markierung 40 hat in Längsrichtung 36 einen Abstand zu dem verschiebbaren Halter 23. Gemäß Fig. 13 vermindert sich der Abstand zwischen der Markierung 40 und dem verschiebbaren Halter 23, wenn die Kabelführung 21 in einem anderen Zustand ist.

## Patentansprüche

1. Kabelführung für ein mehrgliedriges Fahrzeug (14, 15), mit einer Blattfeder (28), mit einem sich entlang der Blattfeder (28) erstreckenden Kabelschlauch (34) und mit einem Kabel (30, 31), das in dem Kabelschlauch (34) geführt ist, wobei die Kabelführung dazu ausgelegt ist, zwischen einem ersten Wagen und einem zweiten Wagen des mehrgliedrigen Fahrzeugs (14, 15) angeordnet zu werden, wobei die Kabelführung einen Mittelbügel (20) umfasst und wobei die Blattfeder (28) mit dem Mittelbügel (20) verbunden ist, wobei der Mittelbügel (20) dazu ausgelegt ist, einen für Passagiere bestimmten Durchgang (17) zu umschließen, und mit einem Halter (23), der den Kabelschlauch (34) in einem festen Abstand relativ zu der Blattfeder (28) hält, wobei der Kabelschlauch (34) durch den Halter (23) in Längsrichtung (26) verschiebbar relativ zu der Blattfeder (28) gelagert ist.

2. Kabelführung nach Anspruch 1, **dadurch gekennzeichnet, dass** der Halter (23) in einer starren Verbindung mit der Blattfeder (28) steht.

3. Kabelführung nach Anspruch 1 oder 2, **dadurch gekennzeichnet, dass** der Kabelschlauch (34) in dem Halter (23) in Längsrichtung (26) verschiebbar gelagert ist.

4. Kabelführung nach einem der Ansprüche 1 bis 3, **gekennzeichnet durch** eine Mehrzahl von Haltern (23, 33) zwischen der Blattfeder (28) und dem Kabelschlauch (34).

5. Kabelführung nach Anspruch 4, **dadurch gekennzeichnet, dass** ein oder mehrere Halter (33) als starre Halter (33) ausgebildet sind, die den Kabelschlauch (34) in Längsrichtung (26) starr relativ zu der Blattfeder (28) halten.

6. Kabelführung nach Anspruch 5, **dadurch gekennzeichnet, dass** der starre Halter (33) dazu bestimmt ist, mit einer Tragestruktur (38) eines angrenzenden Wagens (14, 15) verbunden zu werden.

7. Kabelführung nach einem der Ansprüche 1 bis 6, **dadurch gekennzeichnet, dass** die Verbindung zwischen dem Halter (33) und der Blattfeder (28) als Gelenkverbindung (39) ausgebildet ist.

8. Kabelführung nach einem der Ansprüche 1 bis 7, **dadurch gekennzeichnet, dass** der Halter (23, 33) eine Mehrzahl von Kabelschläuchen (34) hält.

9. Kabelführung nach Anspruch 8, **dadurch gekennzeichnet, dass** die Kabelschläuche (34) auf zwei Seiten der Blattfeder (28) angeordnet sind.

10. Kabelführung nach einem der Ansprüche 1 bis 9, **dadurch gekennzeichnet, dass** ein Führungshebel (25) sich zwischen einer Strebe (22) des Mittelbügel (20) und der Blattfeder (28) erstreckt.

11. Kabelführung nach Anspruch 10, **dadurch gekennzeichnet, dass** der Kabelschlauch (34) in einer Höhenposition zwischen der Strebe (22) und der Blattfeder (28) angeordnet ist.

## Claims

1. Cable guide for an articulated vehicle (14, 15), with a leaf spring (28), with a cable conduit (34) which extends along the leaf spring (28), and with a cable (30, 31) which is guided in the cable conduit (34), the cable guide being designed to be arranged between a first section and a second section of the articulated vehicle (14, 15), the cable guide comprising a central hoop (20), and the leaf spring (28) being connected to the central hoop (20), the central hoop (20) being designed to enclose a passage (17) which is intended for passengers, and with a holder (23) which holds the cable conduit (34) at a fixed spacing relative to the leaf spring (28), the cable conduit (34) being mounted by way of the holder (23) such that it can be displaced in the longitudinal direction (26) relative to the leaf spring (28).

2. Cable guide according to Claim 1, **characterized in that** the holder (23) is in a fixed connection to the leaf spring (28).

3. Cable guide according to Claim 1 or 2, **characterized in that** the cable conduit (34) is mounted in the holder (23) such that it can be displaced in the longitudinal direction (26).

4. Cable guide according to one of Claims 1 to 3, **characterized by** a plurality of holders (23, 33) between the leaf spring (28) and the cable conduit (34).

5. Cable guide according to Claim 4, **characterized in that** one or more holders (33) are configured as fixed holders (33) which hold the cable conduit (34) fixedly in the longitudinal direction (26) relative to the leaf spring (28).

6. Cable guide according to Claim 5, **characterized in that** the fixed holder (33) is intended to be connected to a supporting structure (38) of an adjoining section (14, 15).

7. Cable guide according to one of Claims 1 to 6, **characterized in that** the connection between the holder (33) and the leaf spring (28) is configured as an articulated joint (39).

8. Cable guide according to one of Claims 1 to 7, **characterized in that** the holder (23, 33) holds a plurality of cable conduits (34).

9. Cable guide according to Claim 8, **characterized in that** the cable conduits (34) are arranged on two sides of the leaf spring (28).

10. Cable guide according to one of Claims 1 to 9, **characterized in that** a guide lever (25) extends between a strut (22) of the central hoop (20) and the leaf spring (28) .

11. Cable guide according to Claim 10, **characterized in that** the cable conduit (34) is arranged in a vertical position between the strut (22) and the leaf spring (28).

## Revendications

1. Guidage de câble pour un véhicule à plusieurs éléments (14, 15), comprenant un ressort à lame (28), comprenant un tuyau de câble (34) s'étendant le long du ressort à lame (28) et comprenant un câble (30, 31), qui est guidé dans le tuyau de câble (34), le guidage de câble étant conçu pour être agencé entre une première voiture et une deuxième voiture du véhicule à plusieurs éléments (14, 15), le guidage de câble comprenant un étrier central (20) et le ressort à lame (28) étant relié à l'étrier central (20), l'étrier central (20) étant conçu pour entourer un passage (17) destiné aux passagers, et comprenant un support (23), qui maintient le tuyau de câble (34) à une distance fixe par rapport au ressort à lame (28), le tuyau de câble (34) étant soutenu par le support (23) de manière à pouvoir coulisser dans la direction longitudinale (26) par rapport au ressort à lame (28).

2. Guidage de câble selon la revendication 1, **caractérisé en ce que** le support (23) est en liaison rigide avec le ressort à lame (28).

3. Guidage de câble selon la revendication 1 ou 2, **caractérisé en ce que** le tuyau de câble (34) est monté dans le support (23) de manière à pouvoir coulisser dans la direction longitudinale (26).

4. Guidage de câble selon l'une quelconque des revendications 1 à 3, **caractérisé par** une pluralité de supports (23, 33) entre le ressort à lame (28) et le tuyau de câble (34).

5. Guidage de câble selon la revendication 4, **caractérisé en ce qu'**un ou plusieurs supports (33) sont configurés sous forme de supports rigides (33), qui maintiennent le tuyau de câble (34) dans la direction longitudinale (26) de manière rigide par rapport au ressort à lame (28).

6. Guidage de câble selon la revendication 5, **caractérisé en ce que** le support rigide (33) est destiné à être relié à une structure porteuse (38) d'un chariot adjacent (14, 15).

7. Guidage de câble selon l'une quelconque des revendications 1 à 6, **caractérisé en ce que** la liaison entre le support (33) et le ressort à lame (28) est configurée sous forme de liaison articulée (39).

8. Guidage de câble selon l'une quelconque des revendications 1 à 7, **caractérisé en ce que** le support (23, 33) maintient une pluralité de tuyaux de câble (34).

9. Guidage de câble selon la revendication 8, **caractérisé en ce que** les tuyaux de câble (34) sont agencés sur deux côtés du ressort à lame (28).

10. Guidage de câble selon l'une quelconque des revendications 1 à 9, **caractérisé en ce qu'**un levier de guidage (25) s'étend entre une entretoise (22) de l'étrier central (20) et le ressort à lames (28).

11. Guidage de câble selon la revendication 10, **caractérisé en ce que** le tuyau de câble (34) est agencé à une position de hauteur entre l'entretoise (22) et le ressort à lame (28).
